(19) **Europäisches Patentamt**

**European Patent Office**

**Office européen des brevets**

(11) **EP 0 608 736 B1**

(12) **EUROPEAN PATENT SPECIFICATION**

(45) Date of publication and mention
of the grant of the patent:
**16.08.2000 Bulletin 2000/33**

(51) Int. Cl.⁷: **G01F 15/04**, G01F 1/86,
G01N 33/22, G01F 15/02,
G01N 9/26

(21) Application number: **94100557.1**

(22) Date of filing: **15.01.1994**

(54) **Volumetric flow corrector having a densitometer**

Volumendurchflusskorrektor mit einem Densitometer

Correcteur d'écoulement volumétrique avec un densitomètre

(84) Designated Contracting States:
**BE DE DK ES FR GB IE IT NL**

(30) Priority: **25.01.1993 US 9481**
**14.04.1993 US 48349**

(43) Date of publication of application:
**03.08.1994 Bulletin 1994/31**

(73) Proprietor: **INSTROMET, INC.**
**Houston, Texas 77042 (US)**

(72) Inventor:
**Vander Heyden, William H.**
**Mequon, Wisconsin 53092 (US)**

(74) Representative:
**Patentanwälte**
**Ruff, Beier, Schöndorf und Mütschele**
**Willy-Brandt-Strasse 28**
**70173 Stuttgart (DE)**

(56) References cited:
**EP-A- 0 236 681**      **EP-A- 0 311 238**
**EP-A- 0 468 872**      **US-A- 4 396 299**

**Description**

Technical Field

The present invention relates to the real time measurement of mass and energy flowrates through a pipeline. In particular, the invention relates to an apparatus and method for measuring a volumetric correction ratio which can be defined as a flowing condition density $\rho_f$ of a pipeline gas flowing through a pipeline compared to a base condition density $\rho_b$ of the pipeline gas. A volumetric correction ratio can be used to adjust a measured pipeline gas volumetric flowrate $Q_f$ into a corresponding base condition volumetric flowrate $Q_b$.

Background Art

In gaseous flows, the phenomena of compression exists and has a large effect. It allows the number of molecules for a given volume to change with pressure and temperature as well as with composition. Therefore, it is desirable to make natural gas sales transactions either by mass, energy, or at standard pressure and temperature conditions. In the U. S., for example, the standard pressure and temperature of gas is stated as 1 bar (14.7 psia) and 15,6°C (60°F) for many transactions. Delivery calculations state the flow adjusted to correspond to these base conditions even though the actual gas in the transaction is probably at a different pressure or temperature. A piece of equipment designed to accomplish the task of converting a measured volumetric flowrate $Q_f$ to a base volumetric flowrate $Q_b$ at a defined pressure and temperature is referred to as a "volume corrector".

In the traditional method of gas measurement, a volume correction ratio

$$\frac{Q_b}{Q_f}$$

is determined from the pipeline gas flow temperature, pressure, and composition using the following relation:

$$\frac{Q_b}{Q_f} = \frac{T_b}{T_f} \frac{P_f}{P_b} \frac{Z_b}{Z_f} \tag{1}$$

where $Q_f$ is the measured volumetric flowrate of the pipeline gas through the pipeline $T_b$ and $P_b$ are the base condition temperature and pressure (e.g. 1 bar (14.7 psia) and 15,6°C (60°F), $T_f$ and $P_f$ are the measured flow temperature and pressure of the pipeline gas in the pipeline, $Z_b$ and $Z_f$ are the supercompressibility factors at the base condition and the flow condition, respectively, and $Q_b$ is the base condition volumetric flowrate. Such a calculation is typically carried out in a flow computer.

Using the relation in Eq. (1) to compute base condition volumetric flowrate $Q_b$ requires high accuracy in the measurement of the flow temperature $T_f$ and pressure $P_f$. This requires that pressure and temperature sensors for monitoring $P_f$ and $T_f$ be calibrated frequently.

The ratio

$$\frac{Z_b}{Z_f}$$

in Eq. (1) presents even more difficulties. The composition of the gas is normally measured by gas chromatography and the supercompressibilities, $Z_b$ and $Z_f$, are estimated from either the virial equations of state, or from pre-calculated correlations such as NX-19 or the more recent Gergg Equations. Alternatively, a meter that measures heating value, relative density, %$CO_2$ and %$N_2$ can be used to calculate the ratio

$$\frac{Z_b}{Z_f}.$$

This is because the Gergg Equations in their short form allow calculation of the ratio

$$\frac{Z_b}{Z_f}$$

from these parameters.

Knowledge of the values of the virial coefficients of particular gas compositions is quite limited so calculation of supercompressibility from the virial equation of state is not always possible. The Gergg Equations and NX-19 correlation are mathematical models obtained by mapping known and measured properties. The Gergg Equations, in particular, are very good over a wide range of compositions. Use of the Gergg Equations, however, requires either a chromatograph or a special meter to measure the properties needed to solve the short form Gergg Equations, both of which are expensive.

It is, therefore, difficult to obtain accurate measurement of the supercompressibility ratio

$$\frac{Z_b}{Z_f}$$

in a cost effective manner.

In United States Patent Application Nos. 07/793,753, (now US-A-5 201 581) filed November 18, 1991; 07/787,188, (now US-A- 5 226 728) filed November 4, 1991; and 08/009,481, (now US-A- 5 323 657) filed January 25, 1993; Vander Heyden and Clingman disclose inventions that can determine a volumetric flow correction ratio. These inventions by Vander Heyden and Clingman alleviate the need to compute supercompressibility when determining a volumetric flow correction ratio for a pipeline gas. These inventions also alleviate the need to measure the absolute temperature, absolute pressure, and composition of the pipeline gas. They can do this by tapping sample gas from a pipeline, maintaining the temperature of the sample gas at substantially the same temperature as the pipeline gas flowing through the pipeline, and measuring the flowrate of the sample gas or its equivalent while the sample gas is being maintained at substantially the same temperature as the pipeline gas. These inventions by Vander Heyden and Clingman operate accurately to determine energy flowrates, volume correction ratios

$$\frac{Q_b}{Q_f}'$$

and adjusted or base condition volumetric flowrates $Q_b$.

The inventions by Vander Heyden and Clingman referred to above require that the sample gas flowmeter respond to density and density effects in the same manner as the pipeline gas flowmeter. This means that a volumetric flow corrector having a differential pressure sample gas flowmeter (such as a capillary with a differential pressure cell) which is made to be used with a differential pressure pipeline gas flowmeter (such as an orifice meter) might not be used in another application where the pipeline gas meter is a linear flowmeter (such as a turbine meter). The flexibility of such a volumetric flow corrector is thus limited The same is also true for a volumetric flow corrector having a linear sample gas flowmeter.

The present invention can be used in conjunction with either a differential pressure pipeline gas flowmeter or a linear pipeline gas flowmeter. At the same time, it continues to alleviate the need to compute the supercompressibility of the pipeline gas, and also the need to measure the absolute temperature, the absolute pressure, and composition of the pipeline gas.

Summary of the Invention

The present invention is a method and apparatus for measuring a volumetric flow correction ratio wherein a density of the sample gas at base conditions is measured. By measuring the density of the sample gas at base conditions, the invention is able to determine a volumetric flow correction ratio without requiring that a sample gas flowmeter respond to density and the effects of density in the same manner as a pipeline gas flowmeter with which it is used.

In one aspect, the present invention is a method for measuring a base condition volumetric flowrate ($Q_b$) of a pipeline gas flowing through a pipeline which corresponds to a volumetric flowrate at a base condition pressure and temperature. The method involves measuring a flowrate ($Q_f$) of a pipeline gas flowing through the pipeline with a pipeline gas flowmeter, determining a volumetric correction ratio, and adjusting the flowrate ($Q_f$) of the pipeline gas as measured by the pipeline gas flowmeter by the volumetric correction ratio. In one embodiment, the volumetric correction ratio is determined by flowing sample gas from the pipeline to a capillary, measuring a pressure drop of the sample gas across the capillary as the sample gas flows through the capillary, measuring an energy flowrate (energy per unit time) of the sample gas, measuring a heating value (energy per unit volume) of the sample gas, measuring a base condition density of the sample gas, and calculating the volumetric correction ratio from the measured pressure drop, energy flowrate, heating value, and density. The measured energy flowrate, heating value, and base condition density are each equivalent to what they would be if the sample gas were at base condition temperature and pressure. In a preferred form, a reference gas can be used to measure the base condition energy flowrate, heating value, and density without requiring the sample gas to be at base condition temperature and pressure.

The temperature of the sample gas should be maintained at substantially the same temperature as the pipeline gas when the sample gas is flowing through the capillary. After the sample gas has flowed through the capillary, it is no longer necessary to maintain the temperature of the sample gas at substantially the same temperature as the pipeline gas in the pipeline.

In another embodiment, the volumetric correction ratio is determined by flowing the sample gas from the pipeline to a linear sample gas flowmeter, measuring a sample gas flowrate with the linear sample gas flowmeter, measuring an energy flowrate (energy per unit time) of the sample gas, measuring a heating value (energy per unit volume) of the sample gas, measuring a base condition density of the sample gas, and calculating the volumetric correction ratio from the sample gas flowrate, the energy flowrate, the heating value, and the density. The temperature of the sample gas should be maintained at substantially the same temperature as the pipeline gas in the pipeline when the sample gas flowrate is being measured by the linear sample gas flowmeter.

In another aspect, the present invention is a volumetric flow corrector having a conduit for flowing sample gas from a pipeline; a sample gas flowmeter to measure the flowrate of the sample gas through the conduit, a sample gas energy flowmeter for measuring an energy flowrate (energy per unit time) of the sample gas flowing through the conduit; a sample gas heating value meter for measuring a heating value (energy per unit volume) of the sample gas flowing through the conduit; and a densitometer for measuring a base condition density of the sample gas. Signals from each of these meters can be transmitted to a control system where a volumetric correction ratio can be calculated. It is preferred that the densitometer comprise a chamber, a valve for controlling the flow of sample gas to the chamber, a flow restrictor for restricting the flow of sample gas from the chamber, a pressure sensor for measuring the pressure in the chamber, a means for determining a time rate of change of pressure in the chamber as the sample gas flows through the flow restrictor, and a reference gas. With this kind of densitometer, the density of the sample gas flowing to the sample gas energy flowmeter and sample gas heating value meter can be derived as proportional to the inverse of the square of the time rate of change of pressure in the chamber, and comparing that value to a value obtained in the same manner for the reference gas.

The sample gas flowmeter in the volumetric flow corrector is preferably a linear flowmeter in one embodiment and a differential pressure flowmeter in another embodiment. In the embodiment having a sample gas differential pressure flowmeter, it is preferred that the meter comprise of a capillary and a differential pressure cell to measure the pressure drop of sample gas flowing through the capillary.

The general object of the present invention is to allow accurate measurement of energy flowrates, volume correction ratios

$$\frac{Q_b}{Q_f}$$

and adjusted volumetric flowrates $Q_b$ (i.e., base condition volumetric flowrates) in an improved manner. The present invention improves the accuracy of these measurements because it alleviates the need to consider the effects of the supercompressibility, temperature, pressure, or composition. It can do this because the critical measurement (i.e., the sample gas volumetric flowrate $Q_f'$) is made when the sample gas is at a condition related to pipeline conditions.

An advantage of the present invention is that it is extremely accurate. This is, in part, because the measurement of the sample gas heating value and energy flowrate can be made very accurately because the relation between the amount of air and the paraffin gas energy content when combusted at maximum flame temperatures is accurate within 0.1%. Another reason is that the present invention allows intermittent referencing from a reference gas to insure that the measurement of the sample gas heating value $H_{sample\ gas}$ is accurate and does not drift.

Another object of the present invention is to monitor the pipeline gas without substantially disrupting the flow of pipeline gas through the pipeline. The present invention achieves this object by deriving the volume correction ratio

$$\frac{Q_b}{Q_f}$$

or other results by tapping sample gas from the pipeline and making measurements on the sample gas at a location isolated from the pipeline.

Yet another object of the present invention is to provide a volumetric flow corrector that is able to be used with both differential pressure pipeline flowmeters and linear pipeline flowmeters.

The foregoing and other objects and advantages of the present invention will appear from the following description. In the description, references are made to the accompanying drawings which form a part hereof and in which preferred embodiments of the present invention are shown by way of illustration. Such embodiments do not necessarily represent the full scope of the invention.

Brief Description of the Drawings

Fig. 1 is a schematic drawing illustrating the apparatus of the present invention;
Fig. 2 is a schematic drawing showing a sample gas flowmeter residing within a pipeline gas flow in a pipeline;
Fig. 3 is a schematic drawing showing a sample gas flowmeter being mounted in intimate contact with a pipeline;
Figs. 4a and 4b are schematic drawings showing apparatus for measuring the energy flowrate and heating value of the sample gas;
Fig. 5 is a schematic drawing of a densitometer used in the apparatus of the present invention;
Fig. 6 is a schematic drawing similar to Fig. 1 in which a sample gas flowmeter is a capillary and a differential pressure cell; and
Fig. 7 is a schematic drawing similar to Fig. 1 in which a sample gas flowmeter is a turbine flowmeter.

Description of the Preferred Embodiments

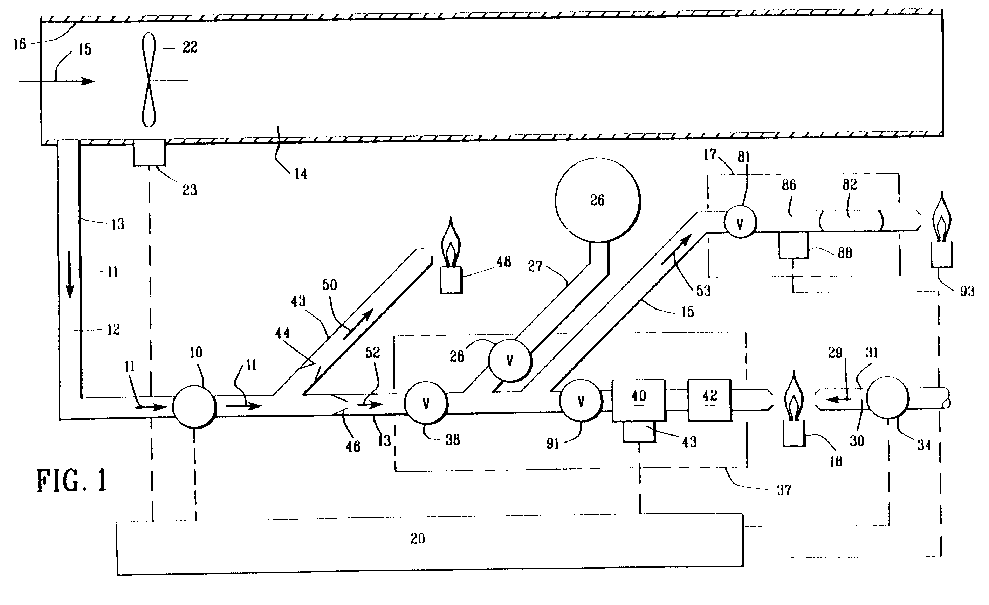

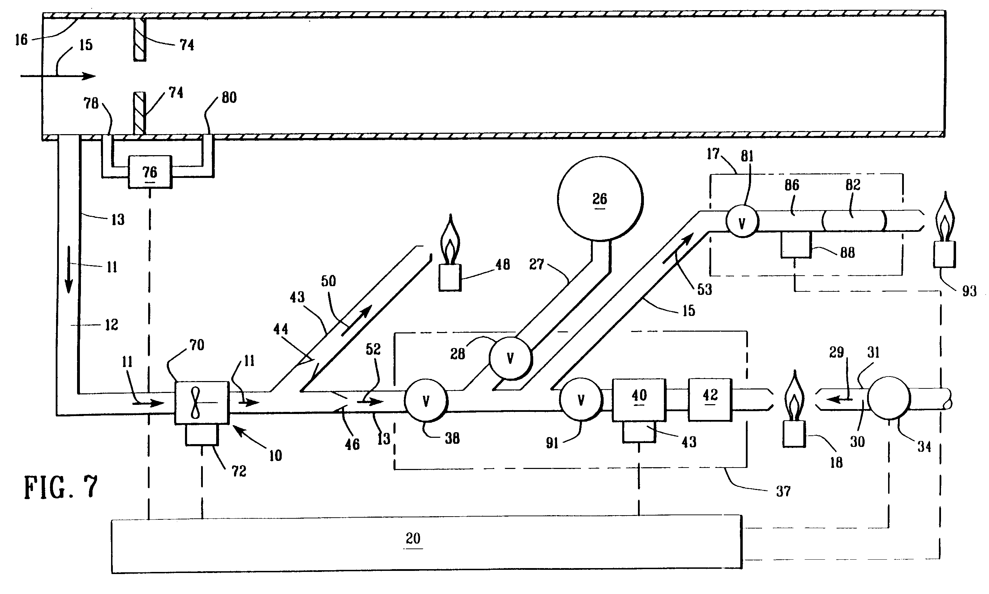

Referring to Fig. 1, the apparatus of the present invention is used in conjunction with a pipeline gas 22 flowmeter that measures a flowrate $Q_f$ of a pipeline gas 14 flowing through a pipeline 16 in the direction of arrow 15. The measured pipeline gas flowrate $Q_f$ is typically a volumetric flowrate. In Fig. 1, the pipeline gas flowmeter 22 is depicted as a turbine flowmeter 22, but the pipeline gas flowmeter 22 need not be a turbine meter 22. It may be another type of flowmeter, including a differential pressure flowmeter, as shown in Fig. 7.

The apparatus of the present invention can be thought of generally as a sample gas meter 10 for measuring a flowrate $Q_f'$ of sample gas 12 flowing through a conduit 13 in the direction of arrow 11, where the sample gas 12 is tapped from the flow of pipeline gas 14 through the pipeline 16; a sample gas energy detector 18 for monitoring a sample gas energy flowrate (energy/time) $E_{sample\ gas}$ and for monitoring a sample gas heating value (energy/volume) $H_{sample\ gas}$; a sample gas densitometer 17 for monitoring a base condition density $\rho_b$ of the sample gas 12; and a control system 20 for computing a base condition volumetric flowrate $Q_b$ for the pipeline gas 14 flowing through the pipeline 16.

The control system 20 computes the pipeline gas base condition volumetric flowrate $Q_b$ from an electronic signal representing the pipeline gas flowrate $Q_f$ as measured by the pipeline gas flowmeter 22 and generated by a signal generator 23, a signal from the sample gas meter 10 representing the flowrate $Q_f'$ of the sample gas, a signal from the gas densitometer 17 representing the base condition density $\rho_b$ of the sample gas 12 and signals from a sample gas burner flow adjuster or meter 37 (collectively components 28, 38, 40, 42, and 43) and possibly from an air flowmeter 34 which represent $E_{sample\ gas}$ and $H_{sample\ gas}$.

In addition, the control system 20 can compute the energy flowrate (energy/time) of the pipeline gas 14 through the pipeline 16. The pipeline gas energy flowrate is easily calculated by multiplying the sample gas energy flowrate $E_{sample\ gas}$ by the ratio

$$\frac{Q_f}{Q_f'},$$

which is the ratio of the pipeline gas 14 flowrate $Q_f$, as measured by the pipeline gas flowmeter 22 in the pipeline 16, compared to the sample gas flowrate $Q_f'$ as measured by the sample gas flowmeter 10.

The base condition volumetric flowrate $Q_b$ for the pipeline gas 14 can be derived from the measured flowrate $Q_f$ of the pipeline gas by adjusting $Q_f$ to correspond to what the volumetric flowrate would be at defined base conditions, such as 15,6°C(60°F)and 1bar (14.7 psi) .The American Gas Association has set standards for both linear and orifice volumetric meters to determine the volume correction ratio

$$\frac{Q_b}{Q_f}$$

used to derive an adjusted or base condition volumetric flowrate $Q_b$ from a measured flowrate $Q_f$. The AGA relation may be stated as:

$$\frac{Q_b}{Q_f} = \left( F_{Pf} F_{Pb} F_{Tf} F_{Tb} \frac{Z_b}{Z_f} \right) \qquad (2)$$

where $F_{Pf}$ is a pressure factor at flow conditions, $F_{Pb}$ is a pressure factor at base conditions, $F_{Tf}$ is a temperature factor at flow conditions, $F_{Tb}$ is the temperature factor at base conditions, and the ratio

$$\frac{Z_b}{Z_f}$$

is the ratio of the compressibility factor at base conditions to the compressibility factor at flow conditions. The present invention alleviates the need to use a relation such as Eq. (2).

In the present invention, the volume correction ratio

$$\frac{Q_b}{Q_f}$$

for a pipeline gas 14 flowing through a pipeline 16 is equivalent to a volume correction ratio

$$\frac{Q_b'}{Q_f'}$$

for sample gas 12 tapped from the pipeline 16. That is:

$$\frac{Q_b}{Q_f} = \frac{Q_b'}{Q_f'} \qquad (3)$$

The relation in Eq. (3) is true if the temperature, pressure, and composition of the gas flowing through the sample gas flowmeter 10 is substantially the same as the temperature, pressure, and composition of the pipeline gas 14 flowing through the pipeline 16. The pressure and the composition of the sample gas 12 are substantially the same as the pressure and the composition of the pipeline gas 14 flowing through the pipeline 16 because the sample gas 12 flowing to the sample gas flowmeter 10 is tapped directly from the pipeline 16.

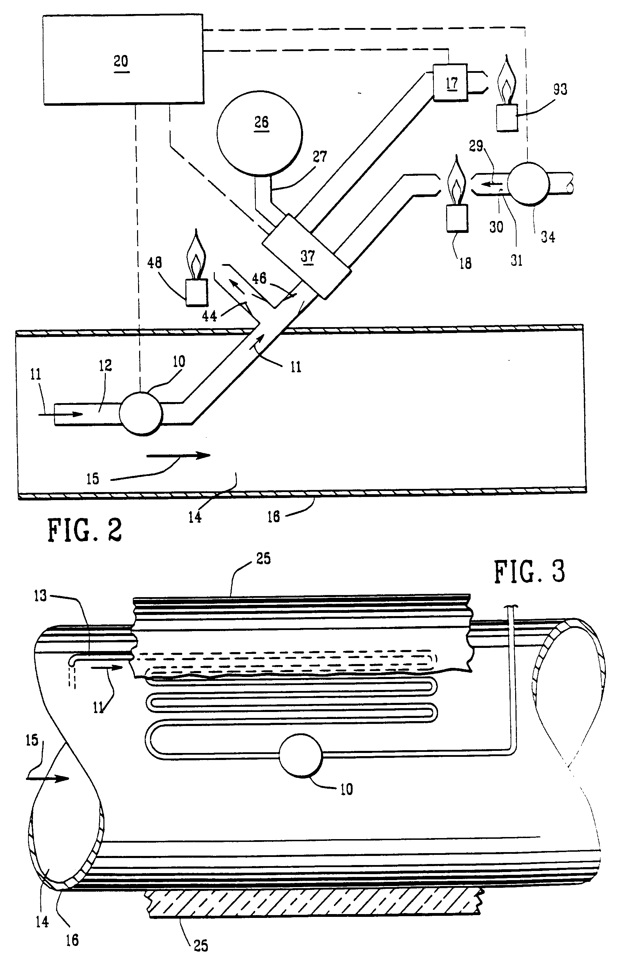

Referring to Fig. 2, the temperature of the sample gas 12 can be maintained at substantially the same temperature as the pipeline gas 14 by immersing the sample gas flowmeter 10 into the stream of pipeline gas 14 flowing through the pipeline 16. Alternatively, referring to Fig. 3, the sample gas 12 can be maintained at substantially the same temperature as the pipeline gas 14 flowing through the pipeline 16 by routing the sample gas 12 to a sample gas flowmeter 10 through a longer serpentined conduit 24 where both the serpentined conduit 24 and the sample gas flowmeter 10 are mounted in intimate contact with the outside surface of the pipeline 16. Insulation 25 should be placed around the serpentined conduit 24, the sample gas flowmeter 10 and the pipeline 16 to facilitate temperature equalization.

With either the configuration shown in Fig. 2 or the configuration shown in Fig. 3, the temperature of the sample gas 12 within the sample gas flowmeter 10 can be maintained at substantially the same temperature as the temperature of the pipeline gas 14 flowing through the pipeline 16. Under these conditions, Eq. (3) applies and the volume correction ratio for the sample gas

$$\frac{Q_b{}'}{Q_f{}'}$$

can be measured and used to adjust the pipeline gas 14 flowrate $Q_f$ as measured by the pipeline gas flowmeter 22 to derive the pipeline gas base condition volumetric flowrate $Q_b$ as shown by the following relation:

$$Q_b = Q_f \left(\frac{Q_b{}'}{Q_f{}'}\right) \tag{4a}$$

or upon rearranging:

$$Q_b = Q_b{}'\left(\frac{Q_f}{Q_f{}'}\right) \tag{4b}$$

Determination Of The Sample Gas Base Condition Volumetric Flow $Q_b{}'$

Referring generally to Fig. 1, the sample gas base condition volumetric flowrate $Q_b{}'$ is measured by energy methods as described by the following relation:

$$Q_b{}' = \frac{E_{sample\ gas}}{H_{sample\ gas}} \tag{5}$$

where $E_{sample\ gas}$ is the base condition energy flowrate of the sample gas 12 through the sample gas flowmeter 10 (energy/time) and $H_{sample\ gas}$ is the base condition heating value of the sample gas 12 flowing through the sample gas flowmeter 10 (energy/volume). The base condition energy flowrate $E_{sample\ gas}$ and the heating value $H_{sample\ gas}$ of the sample gas 10 are determined by flowing the sample gas 12 to the burner 18 and burning the sample gas 12 with air 30 which is also flowed to the burner 18 in the direction of arrow 29.

Referring to Fig. 1, the sample gas 12 stream can be split using parallel sonic nozzles 44 and 46 after the sample gas 12 flows from the sample gas flowmeter 10. Such a system may be useful when it is desired to flow more sample gas 12 through the sample gas flowmeter 10 than to the burner 18. In such a system, sonic nozzle 44 is located in line 43 and sonic nozzle 46 is located in line 13 leading to the burner 18. In Fig. 1, line 43 leads to a catalytic burner 48, but line 43 could lead to another waste method.

Since the temperature, pressure, differential pressure, and composition of the sample gas 12 flowing to the sonic nozzles 44 and 46 is the same, the mass flow of sample gas 12 flowing from the sample gas flowmeter 10 can be split in a known ratio into a waste stream shown by arrow 50 flowing through line 43 and a test stream shown by arrow 52 flowing to the burner 18 and associated apparatus. The ratio of the mass flowrate $\omega_s$ of the sample gas 12 flowing through the sample gas flowmeter 10 to the mass flowrate $\omega_b$ of the sample gas 12 flowing to the burner 18 is designated herein as a split ratio S. The energy flowrate $E_{sample\ gas}$ of the sample gas can be determined by multiplying the energy flowrate as determined by burning the sample gas 12, by the split ratio S. The sonic nozzles 44 and 46 can generally be thought of as a flow splitter.

Reference can be made to U.S. Patent Nos. 3,777,562; 4,062,236; 4,125,018; and 4,125,123, all issued to Clingman, which describe how the heating value and the energy content of the sample gas 12 can be measured. In brief, the amount of air 30 required to completely combust a saturated hydrocarbon gas (e.g., sample gas 12 flowing to the burner 18) at a maximum flame temperature is proportional to the energy released during combustion. In fact, the energy flowrate of a saturated hydrocarbon gas is related to the air 30 flowrate $\omega_{air}$ through a constant $K_{max}$ which has a known and constant value for all saturated hydrocarbon gases, with or without inert fractions. If inert gases are mixed with the fuel, the temperature of the flame reduces due to inert cooling, however, at the maximum temperature for the fuel mixture, the relation between the heating value and the fuel-air ratio remains absolute. Also, $K_{max}$ remains accurate even with mixtures of gas containing small fractions of non-paraffinic gases such as hydrogen.

Using this stoichiometric method, the base condition energy flowrate $E_{burner}$ of the sample gas 12 flowing to the burner 18 can be represented by:

$$E_{burner} = K_{max} \omega_{air} \tag{6}$$

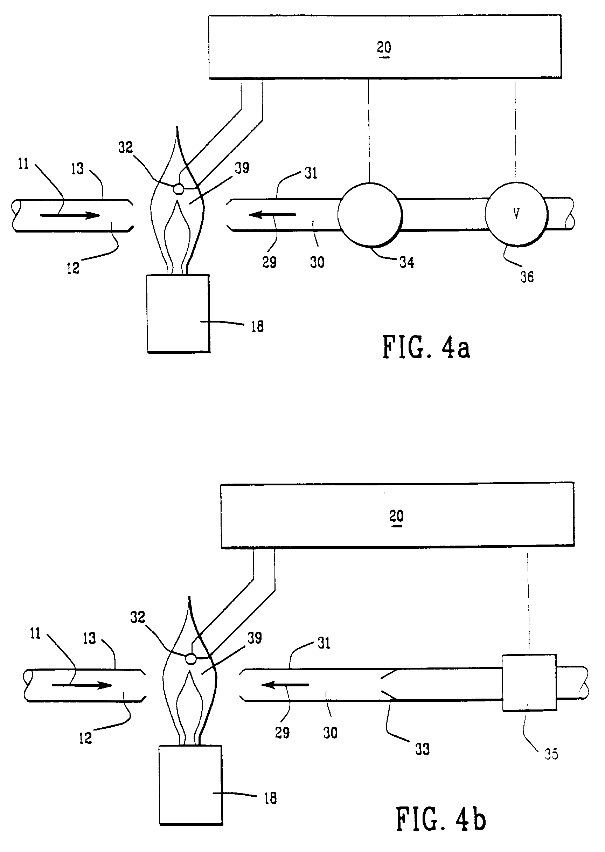

where $K_{max}$ is the stoichiometric proportionality constant, and $\omega_{air}$ is the air mass flowrate to the burner 18. Referring in particular to Fig. 4a, sample gas 12 flows to the burner 18 after it flows from the sample gas flowmeter 10 and possibly other apparatus which is described below. Air 30 is supplied to the burner 18 in the direction of arrow 29 through an air hose 31. The sample gas 12 burns with the air 30 above the burner 18 to form a flame 39. A thermocouple 32 monitors the flame 39 temperature and communicates to the control system 20. Air 30 flowing through the air hose 31 is monitored by an air mass flowmeter 34. Air mass flowmeters are old in the art and are accurate in ambient conditions. The air flow 30 is adjusted by an air valve 36, which is controlled by the control system 20, until the sample gas 12 burns at maximum flame temperature. When the flame burns at the maximum flame temperature, the base condition sample gas energy flowrate $E_{sample\ gas}$ can be determined from a signal from the air flowmeter 34 using Eq. (6).

While an air mass flowmeter 34 is the preferred way of measuring the air mass flowrate $\omega_{air}$, a volumetric or a molar flowmeter can be used. Note, also, that the base condition sample gas energy flowrate $E_{sample\ gas}$ can be measured by flowing a constant air mass flowrate $\omega_{air}$ to the burner 18 and adjusting a flowrate $Q'_{burner}$ of sample gas 12 to the burner 18 until maximum flame temperature is achieved. When maximum flame temperature is achieved, the base condition energy flowrate $E_{burner}$ of sample gas 12 to the burner 18 can again be determined from Eq. (6).

One way to flow air to the burner 18 at a constant flowrate is to flow air through a sonic nozzle under critical flow conditions. Referring to Fig. 4b, such an air system is composed of a very accurate pressure controller 35 forcing air into a sonic nozzle 33. The resulting air flow 30 burns with sample gas 12 in the burner 18. It is preferred that the pressure controller 35 communicate with the control system 20 so the air flowrate $\omega_{air}$ be known in the control system 20. The use of the sonic nozzle 33 under critical flow conditions results in long-term air flow stability. The number of oxygen molecules forced to combustion is very stable. The air flow 30 through the sonic nozzle 33, assuming critical pressure is exceeded, is described as:

$$\omega_{air} = \frac{K_{air} P_{air}}{T_{air}} \tag{7}$$

where $K_{air}$ is the nozzle 33 constant for air, $P_{air}$ is absolute pressure at the nozzle 33 inlet and $T_{air}$ is the absolute temperature at the nozzle 33 inlet. If air pressure $P_{air}$ is maintained constant, the air flow 30 to the burner 18 is constant, and the sample gas energy flowrate to the burner 18 ($E_{burner}$) can remain constant by adjusting the flowrate ($Q'_{burner}$) of sample gas 12 to the burner 18. Referring to Fig. 1, the sample gas 12 flowrate $Q'_{burner}$ to the burner 18 can be measured using a solenoid valve 38, a volume chamber 40, and a flow controller 42 in the conduit 13 as the sample gas 12 flows to the burner 18. Such a volumetric or molar flowmeter for measuring the flowrate $Q'_{burner}$ of sample gas 12 to the burner 18 is described in U.S. Patent 4,285,245, issued August 25, 1981, by Kennedy. This is the preferred way to adjust and measure $Q'_{burner}$, but other ways are known in the art and are acceptable.

A reference gas 26 with a known heating value at base conditions $H_{reference\ gas}$ is used to determine the base condition heating value of the sample gas $H_{sample\ gas}$. Methane is a suitable reference gas 26. At U.S. base conditions of $15{,}6°C(60°\ F)$ and 1 bar (14.7 psi), methane has a heating value of about $37{,}8\ kJ/m^3$ (1,014 Btu/standard cubic foot). In general, the base condition sample gas heating value $H_{sample\ gas}$ can be determined by intermittently flowing the reference gas 26 to the burner 18 and measuring flowrate. Using a reference gas 26 allows the base condition sample gas heating value $H_{sample\ gas}$ to be determined without measuring ambient temperature and pressure.

The energy flowrate of the sample gas flowing to the burner can be represented as the sample gas heating value $H_{sample\ gas}$ (energy per unit volume) multiplied by the sample gas volumetric flowrate to the burner $Q_{sample\ gas}$ (volume/time). Likewise, the energy flowrate of the reference gas flowing to the burner can be represented as the reference gas heating value $H_{reference\ gas}$ multiplied by the reference gas volumetric flowrate to the burner $Q_{reference\ gas}$. Also, from Eq. (6), it can be seen that the ratio of the energy flowrate of the sample gas flowing to the burner compared to the energy flowrate of the reference gas flowing to the burner is the ratio

$$\frac{\omega_{air\ sample}}{\omega_{air\ reference}}$$

where $\omega_{air\ sample}$ is the air flowrate to the burner when the sample gas is being burned at maximum flame temperature, and $\omega_{air}$ reference in the air flowrate to the burner when the reference gas is being burned at maximum flame temperature. The base condition sample gas heating value $H_{sample\ gas}$ can therefore be generally represented by:

$$H_{\text{sample gas}} = H_{\text{reference gas}} \left( \frac{Q_{\text{reference gas}}}{Q_{\text{sample gas}}} \right) \left( \frac{\omega_{\text{air sample}}}{\omega_{\text{air reference}}} \right) \qquad (8)$$

Referring still to Fig. 1, a reference gas 26 can be hooked-up via line 27 and valve 28 to use volume 40 and flow controller 42 for measuring the flowrate of a reference gas 26 flowing to the burner 18. As is described in U.S. Patent No. 4,285,245, flowrate can be measured by determining the rate of pressure decay in chamber 40. For instance, to measure the flowrate $Q_{\text{sample gas}}$ of the sample gas 12 flowing to the burner 18, valves 38 and 91 are opened, valves 28 and 81 are closed, and volume 40 is allowed to fill with sample gas 12. Valve 91 is then closed and the time rate of change of pressure in volume 40 is determined as the sample gas 12 within volume 40 flows through the flow controller 42 to the burner 18. To measure the flowrate $Q_{\text{reference gas}}$ of reference gas 26 flowing to the burner 18, valves 38 and 81 are closed and valves 28 and 91 are opened so that the chamber 40 can fill with reference gas 26. Then valve 91 is closed and the time rate of change of pressure in volume 40 is measured as reference gas 26 flows to the burner 18.

Assuming that the air flow $\omega_{\text{air}}$ to the burner is constant between referencing and sampling periods, the sample gas heating value at base conditions (energy per unit volume) $H_{\text{sample gas}}$ can be determined from the following relation:

$$H_{\text{sample gas}} = \frac{\frac{\partial P}{\partial t}_{\text{reference gas}}}{\frac{\partial P}{\partial t}_{\text{sample gas}}} H_{\text{reference gas}} \qquad (9)$$

where $\frac{\partial P}{\partial t}$ is the time rate of change of pressure in chamber 40 and $H_{\text{reference gas}}$ is the heating value at base conditions for the reference gas 26.

The following analysis explains the determination of $\frac{\partial P}{\partial t}$ in Eq. (9). The rate of pressure change in the chamber 40 with a constant molar flowrate therefrom (or controlled by flow controller 42) is:

$$\frac{\partial P}{\partial t}\left(\frac{V}{RT}\right) = Z\frac{\partial n}{\partial t} + n\frac{\partial Z}{\partial t} \qquad (10)$$

where V is the volume of chamber 40, T is the temperature of gas in the chamber 40, R is a universal gas constant, n is the amount of moles of gas in the chamber 40 $\frac{\partial n}{\partial t}$ is the time rate of change of the amount of moles in the chamber 40, Z is the supercompressibility factor for the gas in the chamber 40 and $\frac{\partial Z}{\partial t}$ is the time rate of change of Z as the gas flows from chamber 40. The time rate of change of Z can be expressed as:

$$\frac{\partial Z}{\partial t} = \frac{\partial P}{\partial t}\left(\frac{\partial Z}{\partial P}\right)_T \qquad (11)$$

where

$$\left(\frac{\partial Z}{\partial P}\right)_T$$

is the rate of change of Z with respect to pressure at constant temperature.

Substituting Eq. (10) into Eq. (11) and simplifying gives:

$$\frac{\partial P}{\partial t}\left(\frac{V}{RT}\right)\left[Z-P\left(\frac{\partial Z}{\partial P}\right)_T\right]=Z^2\frac{\partial n}{\partial t} \tag{12}$$

The supercompressibility of the gas Z can be written as a virial power series with pressure coefficients that are a function of temperature and composition only:

$$Z=1 + b(T,x)P_m + c(T,x)P_m^2 +... \tag{13}$$

where $P_m$ is the pressure at which Z is being computed and $b(T,x)$ and $c(t,x)$ are the second and third virial coefficients. Higher order terms can be neglected because of the relatively low pressures in chamber 40. Substituting Z and

$$\left(\frac{\partial Z}{\partial P}\right)$$

into Eq. (13) and simplifying gives:

$$\frac{\partial P_m}{\partial t}\left(\frac{V_m}{RT}\right)=[1 + 2bP_m + (3c + b^2)P_m^2]\frac{\partial n}{\partial t} \tag{14}$$

Equation (14) shows that $\frac{\partial P}{\partial t}$ measurements are independent of molecular weight. Therefore, the heating value in Eq.(9) can be measured independent of molecular weight changes which could be due to composition changes. Substituting Eq. (14) into Eq. (9) gives the relation:

$$H_{sample\ gas} = \frac{\left(TZ'\frac{\partial n}{\partial t}\right)_{reference\ gas}}{\left(TZ'\frac{\partial n}{\partial t}\right)_{sample\ gas}} H_{reference\ gas} \tag{15}$$

where Z' represents $[1 + 2bP_m + (3c + b^2) P_m^2]$. To solve for $H_{sample\ gas}$ in Eq. (15), the temperature of the sample gas 12 must be compared to the temperature of the reference gas 26 at the time of referencing. The temperature of the sample gas 12 is not compared to the base condition temperature.

Also, to solve for $H_{sample\ gas}$ in Eq. (15), the Z' ratio of the sample gas 12 compared to the reference gas 26 must be determined. It is necessary to consider only the first and second terms in the Z' expansion because relatively low pressures in chamber 40 make higher terms negligible. Eq. (15) then becomes:

$$H_{sample\ gas} = \frac{\left(T(1 +2b P_m)\frac{\partial n}{\partial t}\right)_{reference\ gas}}{\left(T(1 +2b P_m)\frac{\partial n}{\partial t}\right)_{sample\ gas}} H_{reference\ gas} \tag{16}$$

Equation (16) includes two "2bP" terms — one at the sample gas 12 conditions and one at the reference gas 26 conditions. The pressure $P_m$ at which the rate of change of pressure in chamber 40 is measured remains constant whether measuring sample gas 12 flowrate or reference gas 26 flowrate, so Eq. (16) can be reduced to:

$$H_{\text{sample gas}} = \frac{\left(T\frac{\partial n}{\partial t}\right)_{\text{reference gas}}}{\left(T\frac{\partial n}{\partial t}\right)_{\text{sample gas}}} (1 + 2(b_{\text{sam}} - b_{\text{ref}})P_m) H_{\text{reference gas}} \tag{17}$$

The importance of Eq. (17) is that the sample gas 12 heating value at base conditions $H_{\text{sample gas}}$ can be determined from the reference gas 26 heating value at base conditions $H_{\text{reference gas}}$ using Eq. (9), without any need to monitor temperature and pressure at the time the measurements are made. This is because 1) the ratio

$$\frac{\left(\frac{dP}{dt}\right)_{\text{reference gas}}}{\left(\frac{dP}{dt}\right)_{\text{sample gas}}}$$

in Eq. (9) is inherently determined for the flow temperature of the reference gas 26, not for the standard temperature (e.g. 60°F); and 2) the pressure in chamber 40 at which

$$\left(\frac{dP}{dt}\right)_{\text{reference gas}}$$

and

$$\left(\frac{dP}{dt}\right)_{\text{sample gas}}$$

are measured can be held constant. Therefore, $H_{\text{sample gas}}$ can be determined from $H_{\text{reference gas}}$ regardless of the ambient conditions.

It is important to note that the above derivation for the sample gas 12 heating value $H_{\text{sample gas}}$ is made with one major assumption - that the air flow $\omega_{\text{air}}$ to the burner 18 (where maximum flame temperature is achieved) is absolutely constant between referencing and sampling periods. If the air flow were to change, Eq. (9) must be modified to

$$H_{\text{sample gas}} = \frac{\frac{dP}{dt}_{\text{reference gas}}}{\frac{dP}{dt}_{\text{sample gas}}} \left(\frac{\omega_{\text{air sample}}}{\omega_{\text{air reference}}}\right) H_{\text{reference gas}} \tag{18}$$

Equation (18) shows that air flow to the burner 18 can be adjusted in lieu of adjusting gas flowrate or along with adjusting gas flowrate.

## Measurement Of The Ratio $\left(\frac{Q_f}{Q_f'}\right)$

In U. S. patent application No. 08/009,481, (now US-A- 5 323 657) it is explained that the pipeline gas base condition volumetric flowrate $Q_b$ (i.e.

$$Q_b = Q_b' \left( \frac{Q_f}{Q_f'} \right)$$

) can be measured without considering density or the effects of density, if the sample gas 10 flowmeter responds to density in the same manner as the pipeline gas flowmeter 22. In contrast to the invention disclosed in U. S. patent application 08/009,481, (now US-A-5 323 657) the present invention does not require that the sample gas flowmeter 10 respond to density in the same manner as the pipeline gas flowmeter 22. Rather, the present invention measures the base condition density $\rho_b$ of the sample gas.

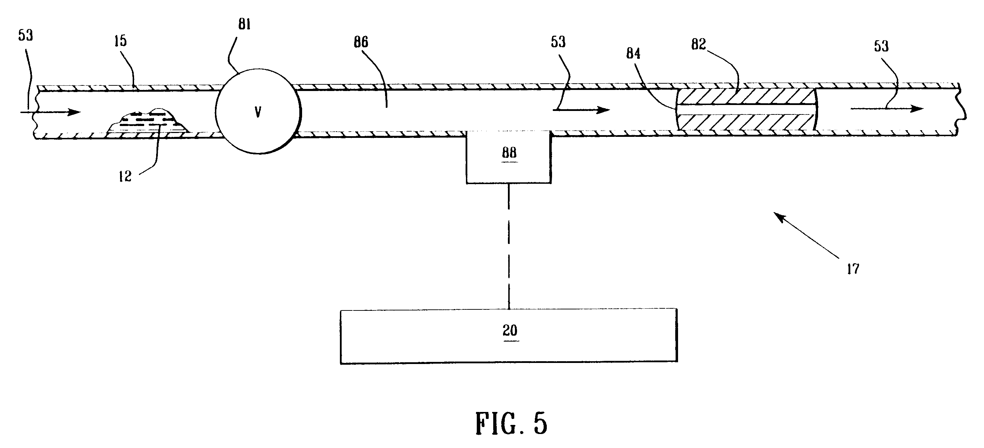

The base condition density $\rho_b$ of the sample gas 12 can be measured by closing valve 91 and flowing sample gas 12, and reference gas 26 intermittently, to the densitometer 17. Gas 12 or 26 flows to the densitometer 17 through a conduit 15 in the direction of arrow 53. Gas 12 or 26 flowing from the densitometer 17 is catalytically burned by a catalytic burner 93. There are several types of gas densitometers known in the art which are suitable for measuring the base condition density $\rho_b$ of the sample gas 12. The preferred densitometer 17 is shown in Fig. 5.

The structure and operation of the densitometer 17 shown in Fig. 5 is described in U. S. Patent No. 4,677,841, issued on July 7, 1987 to Kennedy and entitled "Method and Apparatus for Measuring the Relative Density of Gases". The disclosure in U. S. patent 4,677,841 is incorporated herein by reference.

Referring to Fig. 5, the preferred densitometer 17 can generally be described as a valve 81 in line 15, a piece of sapphire 82 in line 15 with a pore 84 drilled therethrough, a volume 86 between the valve 81 and the piece of sapphire 82, and a pressure transducer 88 for measuring the pressure in the volume 86. The pore 84 is preferably a 0,05mm (0.002 inch) diameter hole drilled through the piece of sapphire 82. The valve 81 can be opened to allow sample gas 12 to flow into the volume 86. The valve 81 is shut periodically. The pressure sensor 88 senses the pressure of the sample gas 12 in the volume 86. When the valve 81 is closed, the control system 20 can determine the time rate of change of the pressure in volume 86 from continuous or periodic signals from the pressure sensor 88. The time rate of change of pressure drop in the volume 86 is proportional to the mass flowrate $\omega_b$ of sample gas 12 through pore 84. The value obtained for the mass flowrate of sample gas 12 through the pore 84 can be squared and inverted in the control system 20 to produce a signal proportional to the density of the sample gas 12 flowing through the pore 84 (i.e. pore density). The base condition density $\rho_b$ of the sample gas 12 is determined by: closing valve 38, opening valve 28, determining a density of the reference gas 26 in the same manner as the pore density, and comparing the density of the reference gas 26 to the pore density.

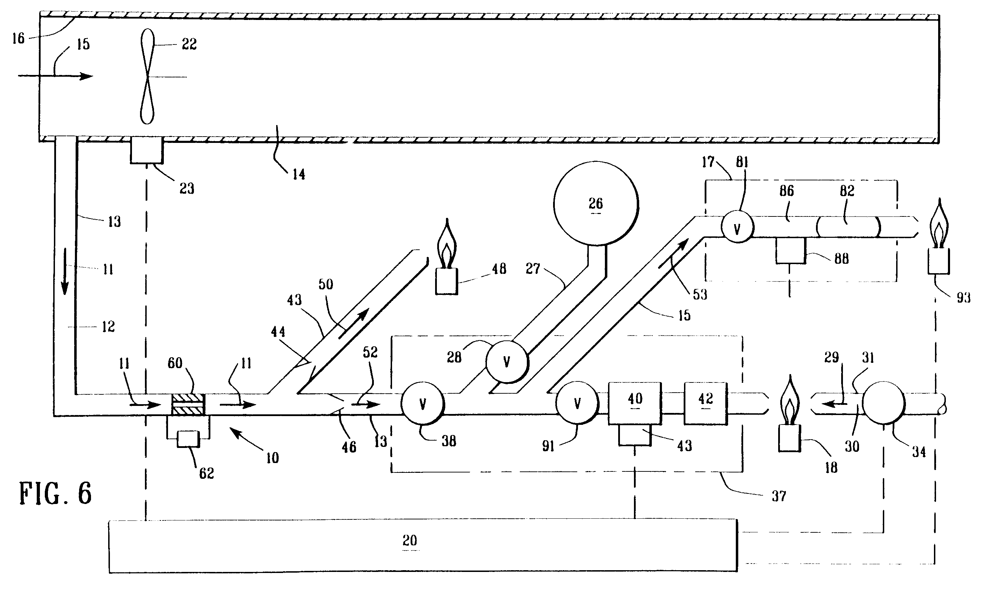

Having measured the base condition density $\rho_b$ of the sample gas 12, the present invention can measure the ratio

$$\left( \frac{Q_f}{Q_f'} \right)$$

even when the sample gas flowmeter 10 does not respond to density in the same manner as the pipeline gas flowmeter 22. Two such systems where the sample gas flowmeter 10 does not respond to density in the same manner are described below: The first is a system having a sample gas flowmeter 10 comprised of a capillary 60 and a differential pressure cell 62 (see Fig. 6). The second is a system where the sample gas flowmeter 10 is a turbine meter 70 with a signal generator 72 (see Fig.7).

Referring to Fig. 6, the differential pressure cell 62 measures the pressure drop $\Delta P_s$ of the sample gas 12 as the sample gas flows through the capillary 60 in the direction of arrows 11. The mass flowrate $\omega_s$ of the sample gas 12 flowing through the capillary 60 can be represented by the following relation.

$$\omega_s = K_s \, C_{Ds} \, Y_s \, d_s^2 \sqrt{\rho_s \Delta P_s} \tag{19}$$

where $K_s$ is a scaling constant for the capillary 60, $C_{Ds}$ is a discharge coefficient for the capillary 60, $Y_s$ is an expansion factor of the sample gas 12 flowing through the capillary 60, $d_s$ is a characteristic diameter for the capillary 60, $\rho_s$ is the density of the sample gas 12 flowing through the capillary 60, and $\Delta P_s$ is the pressure drop across the capillary 60. Note that the capillary 60 and the sample gas 12 therein should be maintained at the same temperature as the pipeline gas 14 in the pipeline 16. Figures 2 and 3 show suitable arrangements to maintain the temperature in the capillary 60 at substantially the same temperature as the pipeline gas 14 in the pipeline 16.

Capillaries can be made in many forms, and the term "capillary" as used herein refers to a device for obtaining a very small, controlled flowrate. As will be apparent to one skilled in the art, the present invention does not require that the capillary 60 be a conventional capillary tube. Rather, any apparatus that allows the flow of sample gas 12 and produces a pressure differential is sufficient. It is preferred, however, that the capillary 60 be a tortuous path capillary tube as is described in patent application nos. 08/009,481, (now US-A- 5 323 657) filed January 25, 1993 and 07/787,188, (now US-A- 5 226 728) filed November 4, 1991. The disclosure in these patent applications is hereby incorporated by reference. The advantage of the tortuous path capillary tube is that the discharge coefficient $C_{Ds}$ is more stable.

The mass flowrate $\omega_s$ of the sample gas through the capillary 60 can be given by the following description:

$$\omega_s = Q_f' \rho_s \tag{20}$$

where $Q_f'$ is the volumetric flowrate of the sample gas 12 through the capillary 60 and $\rho_s$ is the density of the sample gas 12 flowing through the capillary 60. Unless a flow splitter (i.e. sonic nozzles 44 and 46) is used to split the flow of sample gas 12 before it flows to the burner 18, the mass flowrate $\omega_s$ of the sample gas flowing through the capillary 60 is equal to the mass flowrate $\omega_b$ of the sample gas 12 flowing to the burner 18 (i.e. $\omega_s = \omega_b$ ). Assuming that all of the sample gas 12 flowing through the capillary 60 also flows through valve 38, the mass flowrate $\omega_b$ of the sample gas 12 through valve 38 is given by the following relation:

$$\omega_b = \rho_b Q_b' = \rho_b (E_{sample\ gas}/H_{sample\ gas}) \tag{21}$$

where $\rho_b$ is measured by the densitometer 17 and $Q_b'$ (i.e. $E_{sample\ gas}/H_{sample\ gas}$) is determined by burning the sample gas 12 with air 30 as discussed above. If a flow splitter is used, $\omega_s = S\omega_b$ , and this modification should be reflected in Eq. (21) and the following associated analysis.

Setting Eq. (19) and (21) equal to one another (i.e. $\omega_s = \omega_b$ ), solving for $\sqrt{\rho_s}$, and squaring the result gives the following relation for the density $\rho_s$ of the sample gas 12 flowing through the capillary 60:

$$\rho_s = \frac{\rho_b^2 \left(\dfrac{E_{sample\ gas}}{H_{sample\ gas}}\right)^2}{K_s^2 C_{Ds}^2 Y_s^2 d_s^2 \Delta P_s} \tag{22}$$

Referring again to Fig. 6, the volumetric flowrate $Q_f$ of the pipeline gas 14 flowing through the pipeline 16 is measured by a turbine meter 22 having an associated signal generator 23 which sends a frequency signal $f_t$ to the control system 20. The volumetric flowrate $Q_f$ of the pipeline gas 14 flowing through the pipeline can be represented by:

$$Q_f = K_t f_t \tag{23}$$

where $K_t$ is a scaling constant.

Since the volumetric flowrate $Q_f'$ of the sample gas 12 flowing through the capillary 60 is $\omega_s/\rho_s$, it can be seen from Eqs. (19), (22), and (23) that the ratio

$$\left(\frac{Q_f}{Q_f'}\right)$$

is equal to:

$$\frac{Q_f}{Q_f'} = \frac{K_t\, f_t\, \rho_b \left(\dfrac{E_{sample\,gas}}{H_{sample\,gas}}\right)^2}{K_s^2\, C_{Ds}^2\, Y_s^2\, d_s^2\, \Delta P_s} \tag{24}$$

Thus, the ratio

$$\left(\frac{Q_f}{Q_f'}\right)$$

can be determined without knowing the density $\rho_s$ of the sample gas 12 flowing through the capillary 60. While the embodiment shown in Fig. 6 shows a turbine flowmeter 22 monitoring the volumetric flowrate $Q_f$ of the pipeline gas 14 flowing through the pipeline 16, it should be noted that the volumetric flowrate $Q_f$ can be measured by other means, although Eqs. (23) and (24) would have to be altered correspondingly.

Referring to Fig. 7, the sample gas flowmeter 10 in this embodiment is a turbine flowmeter 70 located in line 13. As the sample gas 12 flows through the turbine sample gas flowmeter 70 in the direction of arrows 11, a signal generator 72 generates a signal $f_s$ representing the frequency that the turbine 70 rotates. The frequency signal $f_s$ is electrically transmitted to the control system 20. The volumetric flowrate $Q_f'$ of the sample gas 20 flowing through the sample gas turbine meter 70 can be represented by:

$$Q_f' = K_s f_s \tag{25}$$

where $K_s$ is a scaling constant for the sample gas turbine meter 70, and $f_s$ is a frequency signal from the sample gas turbine meter 70.

In Fig. 7, the volumetric flow $Q_f$ of the pipeline gas 14 flowing through the pipeline 16 is measured using an orifice 74 and a differential pressure cell 76. The differential pressure cell 76 monitors the pressure drop $\Delta P_f$ of the pipeline gas 14 as it flows through the orifice 74 in the direction of arrow 15. It measures the differential pressure drop $\Delta P_f$ across orifice 74 by monitoring the pipeline gas 14 pressure at point 78 before the orifice 74 and at point 80 after the orifice 74.

The differential pressure cell 76 sends a signal representing the pressure difference $\Delta P_f$ to the control system 20. The volumetric flow $Q_f$ through the orifice 74 can be represented by the following expression:

$$Q_f = K_f\, C_{Df}\, Y_f\, d_f^2\, \frac{\sqrt{\Delta P_f}}{\sqrt{\rho_f}} \tag{26}$$

where $K_f$ is a scaling constant for the orifice 74, $C_{Df}$ is a discharge coefficient for the orifice 74, $Y_f$ is an expansion coefficient for the pipeline gas flowing through the orifice 74, $d_f$ is a characteristic diameter for the orifice 74, $\rho_f$ is the density of the pipeline gas 14 flowing through the orifice 74, and $\Delta P_f$ is the differential pressure as measured by the differential pressure cell 76. Since the sample gas 12 flowing through the turbine meter 70 is maintained at the same temperature and pressure as the pipeline gas (see Figs. 2 and 3), the density $\rho_f$ of the pipeline gas 14 flowing through the orifice 74 is equal to the density $\rho_s$ of the sample gas 12 flowing through the sample gas flowmeter 70. Therefore, Eq. (26) can be rewritten as:

$$Q_f = K_f\, C_{Df}\, Y_f\, d_f^2\, \frac{\sqrt{\Delta P_f}}{\sqrt{\rho_s}} \tag{27}$$

Assuming that all of the sample gas 12 flowing through the turbine meter 70 flows through valve 38 (i.e. no flow splitting by sonic nozzles 44 and 46), the mass flowrate $\omega_s$ of the sample gas flowing through the turbine 70 is equal to the mass flowrate $\omega_b$ of the sample gas 12 flowing through valve 38. This can be represented by:

$$Q_f' \rho_s = Q_b' \rho_b \qquad (28a)$$

or

$$Q_f' \rho_s = S Q_b' \rho_b \qquad (28b)$$

if flow splitting occurs. Therefore, the density $\rho_s$ of the sample gas 12 flowing through the sample gas turbine meters 70 can be represented by:

$$\rho_s = \rho_b \frac{Q_b'}{Q_f'} = \rho_b \frac{E_{\text{sample gas}}}{H_{\text{sample gas}} K_s f_s} \qquad (29)$$

Equation (29) can be substituted into Eq. (27), and the ratio

$$\left( \frac{Q_f}{Q_f'} \right)$$

becomes:

$$\frac{Q_f}{Q_f'} = \frac{K_f C_{Df} Y_f d_f^2 \sqrt{\Delta P_f}}{\sqrt{\rho_b \dfrac{E_{\text{sample gas}} K_s f_s}{H_{\text{sample gas}}}}} \qquad (30)$$

In Eq. (30), $K_f$, $C_{Df}$, $Y_f$, $d_f$, and $K_s$ are constants. The other variables ($\Delta P_f$, $\rho_b$, $E_{\text{sample gas}}$, $H_{\text{sample gas}}$, and $f_s$) are measured as discussed above, and signals representing their magnitude are electronically sent to the control system 20. If there is flow splitting by sonic nozzles 44 and 46, Eq. (30) should be modified by multiplying $\rho_b$ in the denominator of Eq. (30) by the split ratio S.

Many modifications and variations of these preferred embodiments that are within the scope of the invention will be apparent to those with ordinary skill in the art.

**Claims**

1. A method for measuring a base condition volumetric flowrate ($Q_b$) that corresponds to a volumetric flowrate at a base condition pressure and temperature, including the steps of diverting a sample gas (12) from the pipeline (16) while maintaining the sample gas (12) at the same temperature as gas (14) in the pipeline (16), measuring an energy flowrate of the sample gas (12) that is related to base condition pressure and temperature, measuring a heating value of the sample gas (12) that is related to base condition pressure and temperature, the method being further characterized by the steps of:

   measuring a flowrate ($Q_f$) of the pipeline gas (14) flowing through the pipeline (16) with a pipeline gas flowmeter (22, 74, 76);
   measuring a flow rate ($Q_f'$) of the sample gas (12) diverted from the pipeline using a sample gas flowmeter (10, 70);
   measuring a base condition density ($\rho_b$) of the sample gas (12) which is equivalent to a density of the sample gas (12) at the base condition temperature and pressure, and
calculating the volumetric correction ratio

$$\left(\frac{Q_b{'}}{Q_f{'}}\right)$$

from a signal representing the flow rate ($f_s$) of the sample gas, the energy flowrate ($E_{sample\ gas}$) the heating value, ($H_{sample\ gas}$) and the base condition density ($\rho_b$); and
determining the volumetric flowrate ($Q_b$) at base conditions by multiplying the flowrate ($Q_f$) of the pipeline gas (14) by the correction ratio

$$\left(\frac{Q_b{'}}{Q_f{'}}\right)$$

according to the relationship,

$$Q_b = Q_f\left(\frac{Q_b{'}}{Q_f{'}}\right).$$

2. A method as recited in claim 1 wherein the pipeline gas flowmeter is a differential pressure gas flowmeter (74,76); and
wherein the sample gas flowmeter is a linear flowmeter (70).

3. A method as recited in claim 1 wherein the pipeline gas flowmeter (22) is a linear gas flowmeter; and
wherein the sample gas flowmeter (10) is a differential pressure flowmeter.

4. A method as recited in one of the preceding claims wherein measuring the heating value of the sample gas (12) is characterized by:

flowing the sample gas (12) to a burner (18) at a sample gas volumetric flowrate ($Q_{sample\ gas}$) and burning the sample gas (12) with air flowing to the burner (18) at a sample gas air flowrate ($\omega_{air\ sample}$), the sample gas air flowrate ($\omega_{air\ sample}$) being of such relative magnitude to the sample gas volumetric flowrate ($Q_{sample\ gas}$) so that the sample gas (12) burns at maximum flame temperature;
intermittently flowing a reference gas (26) to the burner (18) at a reference gas volumetric flowrate ($Q_{reference\ gas}$) and burning the reference gas (26) with air (30) flowed to the burner (18) at a reference gas air flowrate ($\omega_{air\ reference}$), the reference gas air flowrate ($\omega_{air\ reference}$) being of such relative magnitude to the reference gas volumetric flowrate ($Q_{reference\ gas}$) so that the reference gas burns at maximum flame temperature; and
calculating the sample gas heating value ($H_{sample\ gas}$) by the following expression:

$$H_{sample\ gas} = H_{reference\ gas}\frac{\left(Q_{sample\ gas}\right)}{\left(Q_{reference\ gas}\right)}\frac{\left(\omega_{air\ sample}\right)}{\left(\omega_{air\ reference}\right)}$$

where $H_{reference\ gas}$ is a known heating value for the reference gas.

5. A method as recited in claim 4 further characterized in that the ratio

$$\frac{\left(Q_{\text{sample gas}}\right)}{\left(Q_{\text{reference gas}}\right)}$$

of the sample gas volumetric flowrate ($Q_{\text{sample gas}}$) to the burner (18) compared to the reference gas volumetric flowrate ($Q_{\text{reference gas}}$) to the burner (18) is determined by:

measuring a time rate of change of sample gas pressure as the sample gas (12) flows from a chamber (40) at a measuring pressure;
measuring a time rate of change of reference gas pressure as a reference gas (26) flows from the chamber (40) at substantially the same measuring pressure as the sample gas (12); and
dividing the time rate of change of the sample gas pressure by the time rate of change of the reference gas pressure.

6. A method as recited in one of the preceding claims further characterized in that the sample gas energy flowrate is measured through the steps of:

burning sample gas (12) flowing from the flowmeter in a burner (18) with air (30) flowing to the burner (18) at a constant air flowrate;
adjusting the flowrate of the sample gas (12) to the burner (18) so that the sample gas (12) burns at maximum flame temperature; and
determining the sample gas energy flowrate in proportion to the air flowrate.

7. A method as recited in one of the preceding claims further characterized in that the base condition density of the sample gas (12) is measured by:

flowing sample gas into a chamber (86);
stopping the flow of sample gas (12) into the chamber (86);
flowing sample gas from the chamber through a pore (82), the pore (82) being sized so that the square of the sample gas mass flowrate through the pore (82) is inversely proportional to the density of the sample gas (12) flowing through the pore (82);
measuring the time rate of change of the pressure in the chamber (86) as sample gas flows through the pore (82);
deriving a pore density of the sample gas (12) as proportional to the inverse of the square of the time rate of change of pressure in the chamber (86); and
comparing the pore density to the density of a reference gas measured in a like manner.

8. A method as recited in one of the preceding claims further characterized by the step of:

splitting the flow of sample gas (12) flowing from the sample gas flowmeter (10) into a waste stream (50) and a test stream (52) after the sample gas (12) flows through the sample gas flowmeter (10); and
further characterized in that the sample gas energy flowrate ($E_{\text{sample gas}}$) is measured by measuring the energy flowrate of the waste stream (50) and multiplying the energy flowrate of the waste stream (50) by a ratio of a mass flowrate of the sample gas (12) flowing from the sample gas flowmeter (10) compared to a mass flowrate of the test stream (52).

9. A method as recited in claim 8 further characterized by the step of burning the waste stream (50) in a catalytic burner (48).

10. A method as recited in one of the preceding claims further characterized in that the sample gas flowrate is measured with a linear flowmeter (70); and

further characterized in that the sample gas energy flowrate is measured through the steps of :
flowing sample gas (12) from the sample gas flowmeter (10) to a burner (18);
burning the sample gas (12) in the burner (18) with air (30) flowing to the burner (18) at an air flowrate;
adjusting the air flowrate to the burner (18) so that the sample gas (12) burns at maximum flame temperature;

determining the adjusted air flowrate; and

determining the sample gas energy flowrate in proportion to the adjusted air flowrate.

11. A volumetric flow corrector having a sample gas flowmeter (10) for measuring a flowrate ($Q_f'$) of the sample gas (12) through a conduit (13), the sample gas (12) being maintained at substantially the same temperature as the pipeline gas (14) in the pipeline (16), means (37) for measuring an energy flowrate of the sample gas (12) flowing through the conduit (13) which is related to a base condition temperature and pressure, means (34) for measuring a heating value of the sample gas (12) flowing through the conduit (13) which is related to the base condition temperature and pressure, the flow corrector being characterized by:

a densitometer (17) for measuring a base condition density of the sample gas (12) flowing through the conduit (13) which is related to the base condition temperature and pressure; and
means (20) responsive to the flowrate ($Q_f'$) of the sample gas (12) measured by the sample gas flowmeter (10), responsive to the energy flowrate ($E_{sample\ gas}$) of the sample gas (12) measured by said means (37) for measuring an energy flowrate, responsive to the heating value ($H_{sample\ gas}$) of the sample gas (12) measured by the said means (34) for measuring the heating value of the sample gas (12), and responsive to the base condition ($\rho_b$) density of the sample gas (12) measured by the densitomer (17), for calculating a volumetric correction ratio from the sample gas flowrate ($Q_f'$), the energy flowrate ($E_{sample\ gas}$) of the sample gas (12), the heating value ($H_{sample\ gas}$) of the sample gas (12), and the base condition density ($\rho_b$) of the sample gas (12).

12. A volumetric flow corrector as recited in claim 11 further comprising:

a mass flow splitter for splitting the flow of sample gas (12) flowing through the conduit (13) into a test stream (52) and a waste stream (50) after the sample gas flowmeter (10) measures the sample gas flowrate ($Q_f'$),
wherein the sample gas energy flowmeter measures the energy flowrate of the sample gas (12) by measuring the energy flowrate of the test stream (52) and multiplying the energy flowrate of the test stream (52) by a ratio of a mass flowrate of the sample gas (12) flowing from the sample gas flowmeter compared to the mass flowrate of the test stream (52).

13. A volumetric flow corrector as recited in claim 12 further comprising a catalytic burner (48) for burning the sample gas in the waste stream (50).

14. A volumetric flow corrector as recited in one of claims 11 to 13 wherein said means (37) for measuring the energy flowrate of the sample gas (12) is characterized by:

a burner (18) for burning sample gas (12) flowing through the conduit from the sample gas flowmeter with air (30) at an air flowrate to form a flame burning at a flame temperature;
a temperature sensor (32) for measuring the flame temperature; and
an air flow adjustor (34) for adjusting the air flowrate so that the sample gas (12) burns at a maximum flame temperature.

15. A volumetric flow corrector as recited in one of claims 11 to 14 wherein said means for measuring the heating value of the sample gas (12) is characterized by:

a burner (18) for burning sample gas (12) flowing at a sample gas flowrate ($Q_{sample\ gas}$) with air (30) flowing at a sample gas air flowrate ($\omega_{air\ sample}$), the sample gas air flowrate ($\omega_{air\ sample}$) being of such relative magnitude to the sample gas flowrate ($Q_{sample\ gas}$) so that the sample gas (12) burns at maximum flame temperature; and
a reference gas (26) that is intermittently flowed to the burner (18) at a reference gas flowrate ($Q_{reference\ gas}$) and burned with air (30) flowing to the burner (18) at a reference gas air flowrate ($\omega_{reference\ gas}$), the reference gas air flowrate ($\omega_{air\ reference}$) being of such relative magnitude to the reference gas flowrate ($Q_{reference\ gas}$) so that the reference gas burns at maximum flame temperature;
wherein the heating value of the sample gas ($H_{sample\ gas}$) is determined by said means for calculating (20) according to the following expression:

$$H_{sample\ gas} = H_{reference\ gas} \frac{\left(Q_{reference\ gas}\right)}{\left(Q_{sample\ gas}\right)} \frac{\left(\omega_{air\ sample}\right)}{\left(\omega_{air\ reference}\right)}$$

where $H_{reference\ gas}$ is a known heating value for the reference gas (26) at base condition temperature and pressure.

16. A volumetric flow corrector as recited in one of claims 11 to 15 wherein the densitometer (17) is characterized by:

  a chamber (86);
  a valve (81) for controlling the flow of gas to the chamber (86);
  a flow restrictor (82) for restricting the flow of gas from the chamber (86); and
  a pressure sensor (88) for measuring the pressure in the chamber (86).

17. A volumetric flow corrector as recited in one of claims 11 to 16 wherein the pipeline gas flowmeter is a differential pressure gas flowmeter (74, 76); and
  wherein the sample gas flowmeter is a linear flowmeter (70).

18. A volumetric flow corrector as recited in one of claims 11 to 16 wherein the pipeline gas flowmeter (22) is a linear gas flowmeter ; and
  wherein the sample gas flowmeter (10) is a differential pressure flowmeter.

**Patentansprüche**

1. Verfahren zur Messung eines Volumenstroms (volumetric flowrate) ($Q_b$) bei Basisbedingungen, der einen Volumenstrom bei einen Basisbedingungsdruck und einer Basisbedingungstemperatur entspricht, das die Schritte beinhaltet, ein Probengas (12) von der Pipeline (16) umzuleiten, während das Probengas (12) bei der gleichen Temperatur gehalten wird wie Gas (14) in der Pipeline (16), eine Energieflußrate des Probengases (12) bezogen auf den Basisbedingungsdruck und die Basisbedingungstemperatur zu messen, einen Heizwert des Probengases (12) bezogen auf den Basisbedingungsdruck und die Basisbedingungstemperatur zu messen, wobei das Verfahren ferner gekennzeichnet ist durch die Schritte:

  Messung einer Durchflußrate (flowrate) ($Q_f$) des durch die Pipeline (16) strömenden Pipelinegases (14) mit einem Pipelinegasdurchflußmesser (22,74,76);
  Messung einer Durchflußrate ($Q_f'$) des von der Pipeline umgeleiteten Probengases (12) unter Verwendung eines Probengasdurchflußmessers (10, 70) ;
  Messung einer Basisbedingungsdichte ($\rho_b$) des Probengases (12), die äquivalent zu einer Dichte des Probengases (12) bei der Basisbedingungstemperatur und beim Basisbedingungsdruck ist, und
  Berechnung des volumetrischen Korrekturverhältnisses ($Q_b'/ Q_f'$) aus einen Signal, das die Durchflußrate ($f_s$) des Probengases, die Energieflußrate (energy flowrate) ($E_{Probengas}$), den Heizwert ($H_{Probengas}$) und die Basisbedingungsdichte ($\rho_b$) repräsentiert, und
  Bestimmung des Volumenstroms ($Q_b$) bei Basisbedingungen durch Multiplikation der Durchflußrate ($Q_f$) des Pipelinegases (14) mit dem Korrekturverhältnis ($Q_b' / Q_f'$) entsprechend der Beziehung, $Q_b = Q_f (Q_b' / Q_f')$.

2. Verfahren nach Anspruch 1, bei dem der Pipelinegasdurchflußmesser ein Differentialdruck-Gasdurchflußmesser (74, 76) ist; und bei dem der Probengasdurchflußmesser ein linearer Durchflußmesser (70) ist.

3. Verfahren nach Anspruch 1, bei der der Pipelinegasdurchflußmesser (22) ein linearer Gasdurchflußmesser ist; und bei dem der Probengasdurchflußmesser (10) ein Differentialdruck-Durchflußmesser ist.

4. Verfahren nach einem der vorhergehenden Ansprüche, bei dem die Messung des Heizwertes des Probengases (12) gekennzeichnet ist durch:

  Strömung des Probengases (12) mit einer Probengasvolumenflußrate ($Q_{Probengas}$) zu einem Brenner (18) und Verbrennung des Probengases (12) mit Luft, die mit einer ProbengasLuftflußrate ($\omega_{Luftprobe}$) zu dem Brenner (18) strömt,

wobei die Probengas-Luftflußrate ($\omega_{\text{Luftprobe}}$) eine solche relative Größenordnung zur Probengas-Volumenflußrate ($Q_{\text{Probengas}}$) hat, daß das Probengas (12) bei einer maximalen Flammtemperatur verbrennt;

Intermittierende Strömung eines Referenzgases (26) mit einer Referenzgasvolumenstromrate ($Q_{\text{Referenzgas}}$) zu dem Brenner (18) und Verbrennung des Referenzgases (26) mit zu dem Brenner (18) strömender Luft bei einer Referenzgasluftflußrate ($\omega_{\text{Luftreferenz}}$), wobei die Referenzgasluftflußrate ($\omega_{\text{Luftreferenz}}$) von einer solchen relativen Größenordnung zur Referenzgasvolumenstromrate ($Q_{\text{Referenzgas}}$) ist, daß das Referenzgas bei einer maximalen Flammtemperatur verbrennt; und

Berechnung des Probengas-Heizwertes ($H_{\text{Probengas}}$) mit dem folgenden Ausdruck :

$$H_{\text{Probengas}} = H_{\text{Referenzgas}} \left[ (Q_{\text{Probengas}}/Q_{\text{Referenzgas}})\, (\omega_{\text{Luftprobe}}/(\omega_{\text{Luftreferenz}})) \right]$$

bei dem $H_{\text{Referenzgas}}$ ein bekannter Heizwert für das Referenzgas ist.

5. Verfahren nach Anspruch 4, ferner dadurch gekennzeichnet, daß das Verhältnis ($Q_{\text{Probengas}} / Q_{\text{Referenzgas}}$) des Probengas-Volumenstroms ($Q_{\text{Probengas}}$) zu dem Brenner (18) verglichen mit der Referenzgas-Volumenstromrate ($Q_{\text{Referenzgas}}$) zu dem Brenner (18) bestimmt wird durch:

Messung einer Änderungsgeschwindigkeit des Probengasdruckes, während das Probengas (12) bei einem Meßdruck aus einer Kammer (40) strömt;

Messung einer Änderungsgeschwindigkeit des Referenzgasdruckes, während ein Referenzgas (26) bei im wesentlichen dem gleichen Meßdruck wie das Probengas (12) aus der Kammer (40) strömt; und

Teilung der Änderungsgeschwindigkeit des Probengasdruckes durch die Änderungsgeschwindigkeit des Referenzgasdruckes.

6. Verfahren nach einem der vorhergehenden Ansprüche, ferner dadurch gekennzeichnet, daß die Probengas-Energieflußrate durch die Schritte gemessen wird:

Verbrennung von Probengas (12), das von dem Durchflußmesser zu einem Brenner (18) strömt mit bei einer konstanten Luftflußrate zu dem Brenner (18) strömender Luft (30);

Einstellung der Durchflußrate des Probengases (12) zu dem Brenner derart, daß das Probengas (12) bei einer maximalen Flammtemperatur verbrennt; und

Bestimmung der Probengas-Energieflußrate im Verhältnis zur Luftflußrate (air flowrate).

7. Verfahren nach einem der vorhergehenden Ansprüche, ferner dadurch charakterisiert, daß die Basisbedingungsdichte des Probengases (12) gemessen wird durch:

Strömung von Probengas in eine Kammer (86);

Anhalten des Flusses des Probengases (12) in die Kammer (86);

Strömung von Probengas aus der Kammer durch eine Pore (82),

wobei die Pore (82) so dimensioniert ist, daß das Quadrat des Probengas-Massenstroms (sample gas mass flowrate) durch die Pore umgekehrt proportional zur Dichte des durch die Pore (82) fließenden Probengases (12) ist;

Messung der Änderungsgeschwindigkeit des Druckes in der Kammer (86), während Probengas durch die Pore (82) strömt; Ableitung einer Porendichte des Probengases (12) als proportional zum Inversen des Quadrates der Änderungsgeschwindigkeit des Druckes in der Kammer (86); und

Vergleich der Porendichte mit der Dichte des Referenzgases, die in ähnlicher Weise gemessen wird.

8. Verfahren nach einem der vorhergehenden Ansprüche, ferner gekennzeichnet durch den Schritt:

Aufteilung des Stroms des Probengases (12), der vom Probengas-Durchflußmesser (10) strömt, in einen Abgasstrom (50) und in einen Teststrom (52), nachdem das Probengas (12) durch den Probengas-Durchflußmesser (10) fließt; und

ferner dadurch gekennzeichnet, daß die Probengas-Energieflußrate ($E_{\text{Probengas}}$) durch Messung der Energieflußrate des Abgasstroms (50) und Multiplikation der Energieflußrate des Abgasstroms (50) mit einem Verhältnis einer Massenflußrate des Probengases (12), das vom Probengas-Durchflußmesser (10) strömt, verglichen mit der Massenflußrate des Teststromes (52) gemessen wird.

**9.** Verfahren nach Anspruch 8, ferner gekennzeichnet durch den Schritt der Verbrennung des Abgasstroms (50) in einem katalytischen Brenner (48).

**10.** Verfahren nach einen der vorhergehenden Ansprüche, weiterhin dadurch gekennzeichnet, daß die Probengasflußrate mit einem linearen Durchflußmesser (70) gemessen wird; und

ferner dadurch gekennzeichnet, daß die Probengas-Energieflußrate gemessen wird durch die Schritte:

Strömung von Probengas (12) vom Probengas-Durchflußmesser (10) zu einem Brenner (18);
Verbrennung des Probengases (12) im Brenner (18) mit Luft (30), die bei einer Luftflußrate zu dem Brenner strömt;
Einstellung der Luftflußrate zu dem Brenner (18) derart, daß das Probengas bei einer maximalen Flammtemperatur verbrennt; Bestimmung der eingestellten Luftflußrate; und
Bestimmung der Probengas-Energieflußrate im Verhältnis zur eingestellten Luftflußrate.

**11.** Volumendurchflußkorrektor (volumetric flow corrector) mit einem Probengas-Durchflußmesser (10) zur Messung einer Flußrate ($Q_f'$) des Probengases (12) durch eine Leitung (13),
wobei das Probengas (12) bei im wesentlichen der gleichen Temperatur wie das Pipelinegas (14) in der Pipeline (16) gehalten wird, Mitteln (37) zur Messung einer Energieflußrate des durch die Leitung (13) strömenden Probengases (12), bezogen auf eine Basisbedingungstemperatur und einen Basisbedingungsdruck, Mitteln (34) zur Messung eines Heizwertes des durch die Leitung (13) strömenden Probengases (12) bezogen auf eine Basisbedingungstemperatur und einen Basisbedingungsdruck, wobei der Durchflußkorrektor gekennzeichnet ist durch:

einen Dichtemesser (17) zur Messung der Basisbedingungsdichte des durch die Leitung (13) fließenden Probengases (12) bezogen auf eine Basisbedingungstemperatur und einen Basisbedingungsdruck;
Mittel (20), die auf die mittels des Probengas-Durchflußmesser (10) gemessene Durchflußrate ($Q_f'$) des Probengases (12) ansprechen, die auf die mittels der Mittel (37) zur Messung der Energieflußrate ($E_{Probengas}$) des Probengases gemessenen Energieflußrate ansprechen, die auf den mittels der Mittel (34) zur Messung des Heizwertes des Probengases (12) gemessenen Heizwert ($H_{Probengas}$) des Probengases (12) ansprechen, und die auf die mittels des Dichtemessers (17) gemessene Basisbedingungsdichte ($\rho_b$) des Probengases (12) ansprechen, zur Berechnung eines volumetrischen Korrekturverhältnisses aus der Probengasflußrate ($Q_f'$), der Energieflußrate ($E_{Probengas}$) des Probengases (12), dem Heizwert ($H_{Probengas}$) des Probengases (12) und der Basisbedingungsdichte ($\rho_b$) des Probengases (12).

**12.** Volumendurchflußkorrektor nach Anspruch 11, ferner mit:

einem Massenstromteiler zur Aufteilung des durch die Leitung (13) strömenden Probengases in einen Teststrom (52) und in einen Abgasstrom (50), nachdem der Probengas-Durchflußmesser (10) die Probengasflußrate ($Q_f'$) gemessen hat,
wobei der Probengas-Energieflußmesser die Energieflußrate des Probengases (12) durch Messung der Energieflußrate des Teststromes (52) und Multiplikation der Energieflußrate des Teststromes (52) mit einem Verhältnis der Massenflußrate des vom Probengas-Durchflußmesser strömenden Probengases (12) im Vergleich zu der Massenflußrate des Teststromes (52) mißt.

**13.** Volumendurchflußkorrektor nach Anspruch 12, weiterhin mit einem katalytischen Brenner (48) zur Verbrennung des Probengases im Abgasstrom (50).

**14.** Volumemdurchflußkorrektor nach einem der Ansprüche 11 bis 13, bei dem das Mittel (37) zur Messung der Energieflußrate des Probengases (12) gekennzeichnet ist durch:

einen Brenner (18) zur Verbrennung des durch die Leitung vom Probengas-Durchflußmesser strömenden Probengases (12) mit Luft (30) bei einer Luftflußrate, um eine Flamme zu bilden, die bei einer Flammtemperatur brennt;
einen Temperatursensor (32) zur Messung der Flammtemperatur; und
einen Luftstromregler (34) zur Einstellung der Luftflußrate derart, daß das Probengas (12) bei einer maximalen Flammtemperatur verbrennt.

**15.** Volumendurchflußkorrektor nach einem der Ansprüche 11 bis 14, bei der das Mittel zur Messung des Heizwertes des Probengases (12) gekennzeichnet ist durch:

einen Brenner (18) zur Verbrennung des mit einer Probengasflußrate ($Q_{Probengas}$) strömenden Probengases (12) mit Luft (30), die mit einer Probengasluftflußrate ($\omega_{Luftprobe}$) strömt, wobei die Probengasluftflußrate ($\omega_{Luftprobe}$) von einer solchen Größenordnung bezüglich der Probengasflußrate ($Q_{Probengas}$) ist, daß das Probengas (12) bei einer maximalen Flammtemperatur verbrennt; und

ein Referenzgas (26), das intermittierend mit einer Referenzgasflußrate ($Q_{Referenzgas}$) zu dem Brenner (18) geströmt wird und mit Luft (30) verbrannt wird, die mit einer Referenzgas-Luftflußrate ($\omega_{Referenzgas}$) zu dem Brenner (18) strömt, wobei die Referenzgas-Luftflußrate ($\omega_{Luftreferenz}$) von einer solchen Größenordnung bezüglich der Referenzgasflußrate ($Q_{Referenzgas}$) ist, daß das Referenzgas bei einer maximalen Flammtemperatur verbrennt;

wobei der Heizwert des Probengases ($H_{Probengas}$) durch die Mittel zur Berechnung (20) entsprechend folgendem Ausdruck bestimmt wird:

$$H_{Probengas} = H_{Referenzgas} \left[ (Q_{Referenzgas} / Q_{Probengas}) (\omega_{Luftprobe}/\omega_{Luftreferenz}) \right]$$

bei dem $H_{Referenzgas}$ ein bekannter Heizwert des Referenzgases (26) bei einer Basisbedingungstemperatur und einem Basisbedingungsdruck ist.

**16.** Volumendurchflußkorrektor nach einem der Ansprüche 11 bis 15, bei der der Dichtemesser (17) gekennzeichnet ist durch:

eine Kammer (86);
ein Ventil (81) zur Steuerung des Gasstroms zu der Kammer (86);
einen Strömungsbegrenzer (82) zur Begrenzung des Gasstromes von der Kammer (86); und
einen Drucksensor (88) zur Messung des Druckes in der Kammer (86).

**17.** Volumendurchflußkorrektor nach einem der Ansprüche 11 bis 16, bei der der Pipelinegas-Durchflußmesser ein Differentialdruck-Gasdurchflußmesser (74, 76) ist; und
bei dem der Probengas-Durchflußmesser ein lineaer Durchflußmesser (70) ist.

**18.** Volumendurchflußkorrektor nach einem der Ansprüche 11 bis 16, bei der der Pipelinegas-Durchflußmesser (22) ein linearer Gasdurchflußmesser ist;
und bei der der Probengas-Durchflußmesser (10) ein Differentialdruck-Durchflußmesser ist.

**Revendications**

**1.** Procédé de mesure d'un débit volumique en conditions normales ($Q_b$) qui correspond à un débit volumique en conditions normales de pression et de température, incluant les étapes consistant à détourner un gaz prélevé (12) hors de la canalisation (16) tout en maintenant le gaz prélevé (12) à la même température que le gaz (14) transporté dans la canalisation (16), mesurer un débit énergétique du gaz prélevé (12) en rapport avec les conditions normales de pression et de température, mesurer un pouvoir calorifique du gaz prélevé (12) en rapport avec les conditions normales de pression et de température, le procédé étant en outre caractérisé par les étapes consistant à:

mesurer un débit ($Q_f$) du gaz transporté (14) s'écoulant dans la canalisation (16) à l'aide d'un débitmètre de gaz transporté (22, 74, 76);
mesurer un débit ($Q_f'$) du gaz prélevé (12) détourné de la canalisation à l'aide d'un débitmètre de gaz prélevé (10, 70);
mesurer une densité en conditions normales ($\rho_b$) du gaz prélevé (12) qui est équivalente à une densité du gaz prélevé (12) en conditions normales de température et de pression; et
calculer le rapport de correction volumique

$$\left( \frac{Q_b'}{Q_f'} \right)$$

à partir d'un signal représentant le débit ($f_s$) du gaz prélevé, le débit énergétique ($E_{gaz\ prélevé}$), le pouvoir calorifique ($H_{gaz\ prélevé}$) et la densité en conditions normales ($\rho_b$); et

déterminer le débit volumique en conditions normales ($Q_b$) par multiplication du débit ($Q_f$) du gaz transporté (14) par le rapport de correction

$$\left(\frac{Q_b{'}}{Q_f{'}}\right)$$

, d'après la relation

$$Q_b = Q_f\left(\frac{Q_b{'}}{Q_f{'}}\right).$$

2. Procédé selon la revendication 1, dans lequel le débitmètre de gaz transporté est un débitmètre de gaz à pression différentielle (74, 76); et

dans lequel le débitmètre de gaz prélevé est un débitmètre linéaire (70).

3. Procédé selon la revendication 1, dans lequel le débitmètre de gaz transporté (22) est un débitmètre de gaz linéaire; et

dans lequel le débitmètre de gaz prélevé (10) est un débitmètre à pression différentielle.

4. Procédé selon l'une quelconque des revendications précédentes, dans lequel la mesure du pouvoir calorifique du gaz prélevé (12) est caractérisée par le fait de:

envoyer le gaz prélevé (12) vers un brûleur (18) à un débit volumique de gaz prélevé ($Q_{gaz\ prélevé}$) et faire brûler le gaz prélevé (12) avec de l'air envoyé au brûleur (18) à un débit d'air pour gaz prélevé ($\omega_{air\ prélevé}$), la valeur relative du débit d'air pour gaz prélevé ($\omega_{air\ prélevé}$) par rapport au débit volumique de gaz prélevé ($Q_{gaz\ prélevé}$) étant telle que le gaz prélevé (12) brûle à une température de flamme maximale;

envoyer par intermittence un gaz de référence (26) vers le brûleur (18) à un débit volumique de gaz de référence ($Q_{gaz\ de\ référence}$) et faire brûler le gaz de référence (26) avec de l'air (30) envoyé au brûleur (18) à un débit d'air pour gaz de référence ($\omega_{air\ référence}$), la valeur relative du débit d'air pour gaz de référence ($\omega_{air\ référence}$) par rapport au débit volumique de gaz de référence ($Q_{gaz\ de\ référence}$) étant telle que le gaz de référence brûle à une température de flamme maximale; et

calculer le pouvoir calorifique du gaz prélevé ($H_{gaz\ prélevé}$) en utilisant l'expression suivante:

$$H_{gazprélevé} = H_{gazderéférence}\frac{\left(Q_{gazprélevé}\right)}{\left(Q_{gazderéférence}\right)}\frac{\left(\omega_{airprélevé}\right)}{\left(\omega_{airréférence}\right)}$$

dans laquelle $H_{gaz\ de\ référence}$ est un pouvoir calorifique connu pour le gaz de référence.

5. Procédé selon la revendication 4, caractérisé en outre par le fait que le rapport

$$\frac{\left(Q_{gazprélevé}\right)}{\left(Q_{gazderéférence}\right)}$$

du débit volumique de gaz prélevé ($Q_{gaz\ prélevé}$) vers le brûleur (18) comparé au débit volumique de gaz de référence ($Q_{gaz\ de\ référence}$) vers le brûleur (18) est déterminé par:

mesure d'une vitesse de variation de la pression du gaz prélevé à mesure que le gaz prélevé (12) sort d'une chambre (40) à une certaine pression de mesure;

mesure d'une vitesse de variation de la pression du gaz de référence à mesure qu'un gaz de référence (26) sort de la chambre (40) sensiblement à la même pression de mesure que le gaz prélevé (12); et division de la vitesse de variation de la pression du gaz prélevé par la vitesse de variation de la pression du gaz de référence.

**6.** Procédé selon l'une quelconque des revendications précédentes, caractérisé en outre par le fait que le débit énergétique du gaz prélevé est mesuré par les étapes consistant à:

faire brûler le gaz prélevé (12) sortant du débitmètre dans un brûleur (18) avec de l'air (30) envoyé au brûleur (18) à un débit d'air constant;
ajuster le débit du gaz prélevé (12) vers le brûleur (18) de façon que le gaz prélevé (12) brûle à une température de flamme maximale; et
déterminer le débit énergétique du gaz prélevé proportionnellement au débit d'air.

**7.** Procédé selon l'une quelconque des revendications précédentes, caractérisé en outre par le fait que la densité du gaz prélevé (12) en conditions normales est mesurée par les opérations consistant à:

envoyer le gaz prélevé dans une chambre (86);
arrêter l'écoulement de gaz prélevé (12) vers la chambre (86);
faire sortir le gaz prélevé de la chambre par un pore (82), le pore (82) étant de dimension telle que le carré du débit massique du gaz prélevé à travers le pore (82) est inversement proportionnel à la densité du gaz prélevé (12) traversant le pore (82);
mesurer la vitesse de variation de la pression dans la chambre (86) à mesure que le gaz prélevé sort par le pore (82);
déduire une densité de pore du gaz prélevé (12) proportionnellement à l'inverse du carré de la vitesse de variation de pression dans la chambre (86); et
comparer la densité de pore à la densité d'un gaz de référence mesurée d'une manière équivalente.

**8.** Procédé selon l'une quelconque des revendications précédentes, caractérisé en outre par l'étape consistant à:

diviser l'écoulement de gaz prélevé (12) sortant du débitmètre de gaz prélevé (10) en un courant perdu (50) et un courant d'essai (52) une fois que le gaz prélevé (10) a traversé le débitmètre de gaz prélevé (10); et
caractérisé en outre par le fait que le débit énergétique du gaz prélevé ($E_{gaz\ prélevé}$) est mesuré par mesure du débit énergétique du courant perdu (50) et multiplication du débit énergétique du courant perdu (50) par le rapport d'un débit massique du gaz prélevé (12) sortant du débitmètre de gaz prélevé (10) comparé à un débit massique du courant d'essai (52).

**9.** Procédé selon la revendication 8, caractérisé en outre par l'étape consistant à faire brûler le courant perdu (50) dans un brûleur catalytique (48).

**10.** Procédé selon l'une quelconque des revendications précédentes, caractérisé en outre par le fait que le débit du gaz prélevé est mesuré à l'aide d'un débitmètre linéaire (70); et
caractérisé en outre par le fait que le débit énergétique du gaz prélevé est mesuré par les étapes consistant à:

envoyer un gaz prélevé (12) sortant du débitmètre de gaz prélevé (10) à un brûleur (18);
faire brûler le gaz prélevé (12) dans le brûleur (18) avec de l'air (30) envoyé au brûleur (18) à un certain débit d'air;
ajuster le débit d'air vers le brûleur (18) de façon que le gaz prélevé (12) brûle à une température de flamme maximale;
déterminer le débit d'air ajusté; et
déterminer le débit énergétique du gaz prélevé en relation par rapport au débit d'air ajusté.

**11.** Correcteur de débit volumique, comprenant un débitmètre de gaz prélevé (10) pour mesurer un débit ($Q_f$) du gaz prélevé (12) dans un conduit (13), le gaz prélevé (12) étant maintenu sensiblement à la même température que le gaz transporté (14) dans la canalisation (16), un moyen (37) pour mesurer un débit énergétique du gaz prélevé (12) s'écoulant dans le conduit (13) en rapport avec des conditions normales de température et de pression, un moyen (34) pour mesurer un pouvoir calorifique du gaz prélevé (12) s'écoulant dans le conduit (13) en rapport avec les conditions normales de température et de pression, le correcteur de débit étant caractérisé par:

un densitomètre (17) pour mesurer une densité en conditions normales du gaz prélevé (12) s'écoulant dans le conduit (13) en rapport avec les conditions normales de température et de pression; et

un moyen (20) répondant au débit ($Q_f'$) du gaz prélevé (12) mesuré par le débitmètre de gaz prélevé (10), répondant au débit énergétique ($E_{gaz\ prélevé}$) du gaz prélevé (12) mesuré par ledit moyen (37) de mesure de débit énergétique, répondant au pouvoir calorifique ($H_{gaz\ prélevé}$) du gaz prélevé (12) mesuré par ledit moyen (34) de mesure du pouvoir calorifique du gaz prélevé (12), et répondant à la densité en conditions normales ($\rho_b$) du gaz prélevé (12) mesurée par le densitomètre (17), pour calculer un rapport de correction volumique à partir du débit du gaz prélevé ($Q_f'$), du débit énergétique ($E_{gaz\ prélevé}$) du gaz prélevé (12), du pouvoir calorifique ($H_{gaz\ prélevé}$) du gaz prélevé (12), et de la densité en conditions normales ($\rho_b$) du gaz prélevé (12).

**12.** Correcteur de débit volumique selon la revendication 11, comprenant en outre:

un diviseur de débit massique pour séparer l'écoulement de gaz prélevé (12) s'écoulant dans le conduit (13) en un courant d'essai (52) et un courant perdu (50) une fois que le débitmètre de gaz prélevé (10) a mesuré le débit de gaz prélevé ($Q_f'$),

dans lequel le débitmètre énergétique de gaz prélevé mesure le débit énergétique du gaz prélevé (12) par mesure du débit énergétique du courant d'essai (52) et multiplication du débit énergétique du courant d'essai (52) par un rapport d'un débit massique du gaz prélevé (12) sortant du débitmètre de gaz comparé au débit massique du courant d'essai (52).

**13.** Correcteur de débit volumique selon la revendication 12, comprenant en outre un brûleur catalytique (48) pour brûler le gaz prélevé dans le courant perdu (50).

**14.** Correcteur de débit volumique selon l'une quelconque des revendications 11 à 13, dans lequel ledit moyen (37) de mesure de débit énergétique du gaz prélevé (12) est caractérisé par:

un brûleur (18) pour faire brûler le gaz prélevé (12), sortant par le conduit du débitmètre de gaz prélevé, avec de l'air (30) à un certain débit d'air pour former une flamme brûlant à une certaine température de flamme;
un capteur de température (32) pour mesurer la température de flamme; et
un dispositif de réglage de débit d'air (34) pour ajuster le débit d'air de façon que le gaz prélevé (12) brûle à une température de flamme maximale.

**15.** Correcteur de débit volumique selon l'une quelconque des revendications 11 à 14, dans lequel ledit moyen de mesure du pouvoir calorifique du gaz prélevé (12) est caractérisé par:

un brûleur (18) pour brûler le gaz prélevé (12) s'écoulant à un débit de gaz prélevé ($Q_{gaz\ prélevé}$) avec de l'air (30) s'écoulant à un débit d'air pour gaz prélevé ($\omega_{air\ prélevé}$), la valeur relative du débit d'air pour gaz prélevé ($\omega_{air\ prélevé}$) par rapport au débit de gaz prélevé ($Q_{gaz\ prélevé}$) étant telle que le gaz prélevé (12) brûle à une température de flamme maximale; et
un gaz de référence (26) qui est envoyé par intermittence vers le brûleur (18) à un débit de gaz de référence ($Q_{gaz\ référence}$) et est brûlé avec de l'air (30) envoyé au brûleur (18) à un débit d'air pour gaz de référence ($\omega_{air\ référence}$), la valeur relative du débit d'air pour gaz de référence ($\omega_{air\ référence}$) par rapport au débit de gaz de référence ($Q_{gaz\ de\ référence}$) étant telle que le gaz de référence brûle à une température de flamme maximale; et
dans lequel le pouvoir calorifique du gaz prélevé ($H_{gaz\ prélevé}$) est déterminé par ledit moyen de calcul (20) d'après l'expression suivante:

$$H_{gazprélevé} = H_{gazderéférence}\ \frac{\left(Q_{gazderéférence}\right)\left(\omega_{airprélevé}\right)}{\left(Q_{gazprélevé}\right)\left(\omega_{airréférence}\right)}$$

dans laquelle $H_{gaz\ de\ référence}$ est un pouvoir calorifique connu pour le gaz de référence (26) en conditions normales de température et de pression.

**16.** Correcteur de débit volumique selon l'une quelconque des revendications 11 à 15, dans lequel le densitomètre (17) est caractérisé par:

une chambre (86);
une valve (81) pour régler le débit de gaz vers la chambre (86);
un dispositif de resserrement d'écoulement (82) pour resserrer l'écoulement de gaz hors de la chambre (86); et
un capteur de pression (88) pour mesurer la pression dans la chambre (86).

**17.** Correcteur de débit volumique selon l'une quelconque des revendications 11 à 16, dans lequel le débitmètre de gaz transporté est un débitmètre de gaz à pression différentielle (74, 76); et
dans lequel le débitmètre de gaz prélevé est un débitmètre linéaire (70).

**18.** Correcteur de débit volumique selon l'une quelconque des revendications 11 à 16, dans lequel le débitmètre de gaz transporté (22) est un débitmètre de gaz linéaire; et
dans lequel le débitmètre de gaz prélevé (10) est un débitmètre à pression différentielle.

**FIG. 1**

FIG. 2

FIG. 3

FIG. 4a

FIG. 4b

FIG. 5

FIG. 6

FIG. 7